(19) Europäisches Patentamt
European Patent Office
Office européen des brevets

(11) EP 4 442 725 A1

(12) EUROPEAN PATENT APPLICATION
published in accordance with Art. 153(4) EPC

(43) Date of publication:
**09.10.2024 Bulletin 2024/41**

(21) Application number: **22901737.1**

(22) Date of filing: **30.11.2022**

(51) International Patent Classification (IPC):
***C08G 18/76*** *(2006.01)* ***C08G 18/77*** *(2006.01)*
***C08G 18/38*** *(2006.01)* ***G02B 1/04*** *(2006.01)*
***C08G 18/09*** *(2006.01)* ***C07C 311/65*** *(2006.01)*
***C08L 75/02*** *(2006.01)*

(52) Cooperative Patent Classification (CPC):
**C07C 311/65; C08G 18/09; C08G 18/38; C08G 18/76; C08G 18/77; C08L 75/02; G02B 1/04**

(86) International application number:
**PCT/KR2022/019141**

(87) International publication number:
**WO 2023/101379 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2021 KR 20210169322**
**17.10.2022 KR 20220133365**

(71) Applicant: **Hanwha Solutions Corporation**
**Jung-gu**
**Seoul 04541 (KR)**

(72) Inventors:
- **KIM, Jiyeon**
  **Daejeon 34128 (KR)**
- **SIM, Yujin**
  **Daejeon 34128 (KR)**
- **WOO, Eun Ji**
  **Daejeon 34128 (KR)**
- **KWON, Dowoo**
  **Daejeon 34128 (KR)**
- **KIM, Jong Jin**
  **Daejeon 34128 (KR)**

(74) Representative: **Berggren Oy**
**P.O. Box 16**
**Eteläinen Rautatiekatu 10A**
**00101 Helsinki (FI)**

# (54) ISOCYANATE COMPOSITION AND OPTICAL COMPOSITION

(57) The present disclosure relates to an isocyanate composition having excellent storage stability and an optical lens produced from such an isocyanate composition.

## Description

### [TECHNICAL FIELD]

CROSS-REFERENCE TO RELATED APPLICATION(S)

The present application claims the benefit of priority based on Korean Patent Application No. 10-2021-0169322 filed on November 30, 2021 and Korean Patent Application No. 10-2022-0133365 filed on October 17, 2021 in the Korean Intellectual Property Office, the disclosures of which are incorporated herein by reference in their entirety.

The present disclosure relates to an isocyanate composition and an optical composition.

### [BACKGROUND ART]

Polymer materials are lightweight, are hardly broken and have excellent dyeability and other mechanical and optical properties as compared to inorganic materials such as glass. Therefore, in recent years, various types of polymer resins and the like are widely used as substitute materials for glass in the optical field.

In recent years, with the development of electronic technology and optical technology, high performance of optical materials is further required in terms of optical properties such as high transparency and high refractive index, and mechanical properties such as low specific gravity, high heat resistance, and high impact resistance.

Among them, a lens made from a polythiourethane-based compound has a high refractive index, is lightweight and has high impact resistance, and thus is often used as optical materials.

Since such a polythiourethane-based compound is produced by a polymerization reaction between a polyfunctional polythiol compound and a polyfunctional isocyanate compound, optical properties of the lens, such as transparency and refractive index, may be affected by the chemical properties of the polyfunctional diisocyanate compound.

Therefore, there is a need to study the chemical properties such as the stability of the diisocyanate-based compound itself.

### [DETAILED DESCRIPTION OF THE INVENTION]

### [Technical Problem]

It is an object of the present disclosure to provide an isocyanate composition having excellent storage stability and an optical composition produced from such an isocyanate composition.

### [Technical Solution]

Provided herein is an isocyanate composition comprising a diisocyanate-based compound, and a sulfonyl isocyanate-based compound.

According to one embodiment, the diisocyanate-based compound may be represented by the following Chemical Formula 1:

[Chemical Formula 1]

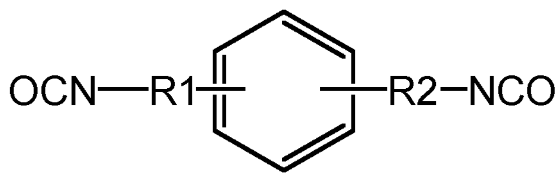

wherein, in Chemical Formula 1,

R1 and R2 are each independently an alkylene having 1 to 5 carbon atoms, and other carbons to which R1 or R2 are not linked in the benzene ring may be each independently substituted with an alkyl having 1 to 5 carbon atoms.

And, the sulfonyl isocyanate-based compound may be represented by the following Chemical Formula 2:

[Chemical Formula 2]

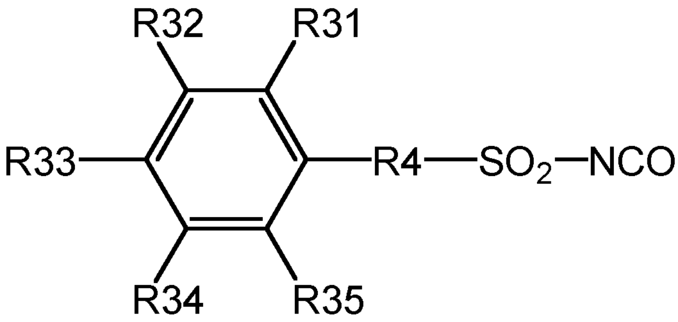

wherein, in Chemical Formula 2, R31 to R35 are hydrogen or an alkyl having 1 to 5 carbon atoms, and R4 is a single bond or an alkylene having 1 to 5 carbon atoms.

According to one embodiment, the isocyanate composition may comprise the sulfonyl isocyanate-based compound in an amount of about 1 to about 5000 ppmw, or about 1 ppmw or more, or about 10 ppmw or more, or about 100 ppmw or more, or about 400 ppmw or more, or about 500 ppmw or more, or about 600 ppmw or more, or about 900 ppmw or more, or about 5000 ppmw or less, or about 4000 ppmw or less, or about 3000 ppmw or less, or about 2500 ppmw or less with respect to the diisocyanate-based compound.

And, the isocyanate composition may have an acidity value of about 10 ppm or more, or about 20 ppm or more, or about 40 ppm or more, or about 50 ppm or more, or about 100 ppm or more, and about 500 ppm or less, or about 400 ppm or less, or about 300 ppm or less, or about 200 ppm or less.

According to one embodiment, the isocyanate composition has a diisocyanate-based oligomer content of about 3 area% or less as measured after being stored at 5°C for 40 weeks under a nitrogen atmosphere.

And, according to one embodiment, the isocyanate composition has an APHA value of about 150 or less, or about 100 or less, or about 50 or less, or about 30 or less, or about 20 or less, or about 15 or less as measured according to ASTM D1209 standard (C/2) after being stored at 5°C for 40 weeks under a nitrogen atmosphere, and the lower limit does not have a great significance, but may be more than 0 or about 1 or more.

Also provided is a polymeric composition comprising: i) the above-mentioned disocyanate composition and ii) at least one of a polyfunctional thiol-based compound and a polyfunctional episulfide-based compound.

According to one embodiment, the polyfunctional thiol-based compound may include at least one selected from the group consisting of 4,8-bis(mercaptomethyl)-3,6,9-trithiaundecane-1,11-dithiol, 4,7-bis(mercaptomethyl)-3,6,9-trithiaundecane-1,11-dithiol, 5,7-bis(mercaptomethyl)-3,6,9-trithiaundecane-1,11-dithiol, bis(2-mercaptoethyl)sulfide, 4-mercaptomethyl-3,6-dithiaoctane-1,8-dithiol, 2,3-bis(2-mercaptoethylthio)propane-1-thiol, 2,2-bis(mercaptomethyl)propane-1,3-dithiol, 2-(2-mercaptoethylthio)propane-1,3-dithiol, 2-(2,3-bis(2-mercaptoethylthio)propylthio)ethanethiol, bis(2,3-dimercaptopropanyl)sulfide, bis(2,3-dimercaptopropanyl)di sulfide, 1,2-bis(2-(2-mercaptoethylthio)-3-mercaptopropylthio)ethane, bis(2-(2-mercaptoethylthio)-3-mercaptopropyl)disulfide, 2-(2-mercaptoethylthio)-2-mercapto-3-[3-mercapto-2-(2-mercaptoethylthio)-propylthio]propylthio-propane-1-thiol, 2-(2-mercaptoethylthio)-3-mercapto-3-[3-mercapto-2-(2-mercaptoethylthio)-propylthio]propylthio-propane-1-thiol, 2-(2-mercaptoethylthio)-3-(2-(2-[3-mercapto-2-(2-mercaptoethylthio)-propylthio]ethylthio)ethylthio)-propane-1-thiol, (4R,11S)-4,11-bis(mercaptomethyl)-3,6,9,12-tetrathiatetradecane-1,14-dithiol, (S)-3-((R-2,3-dimercaptopropyl)thio)propane-1,2-dithiol, 4,14-bis(mercaptomethyl)-3,6,9,12,15-pentathiaheptadecane-1,17-dithiol, (S)-3-((R-3-mercapto-2-((2-mercaptoethyl)thio)propyl)thio)propyl)thio)-2-((2-mercaptoethyl)thio)propane-1-thiol, 3,3'-dithiobis(propane-1,2-dithiol), (7R,11 S)-7,11-bis(mercaptomethyl)-3,6,9,12,15-pentathiaheptadecane-1,17-dithiol, (7R,12S)-7,12-bis(mercaptomethyl)-3,6,9,10,13,16-hexathiaoctadecane-1,18-dithiol, 2-(2-mercaptoethylthio)-3-[4-(1-{4-[3-mercapto-2-(2-mercaptoethylthio)-propoxy]-phenyl}-1-methylethyl)-phenoxy]-propane-1-thiol, 2,2-bis-(3-mercapto-propionyloxymethyl)-butyl ester, pentaerythritol tetrakis(3-mercaptopropionate), pentaerythritol tetrakis(2-mercaptoacetate), bispentaerythritol-ether-hexakis(3-mercaptopropionate), trimethylolpropane tris(2-mercaptopropionate), trimethylolpropane tris(3-mercaptopropionate), glycerol trimercaptopropionate, 1,1,3,3-tetrakis(mercaptomethylthio)propane, 1,1,2,2-tetrakis(mercaptomethylthio)ethane, 4,6-bis(mercaptomethylthio)-1,3-dithiane, 2-(2,2-bis(mercaptomethylthio)ethyl)-1,3-dithiane, and 2,5-bi smercaptomethyl-1,4-dithiane.

Further provided is an optical lens comprising: i) the above-mentioned isocyanate composition, and ii) at least one of a polyfunctional thiol-based compound and ii) a polyfunctional episulfide-based compound.

The terms "first," "second," etc. are used herein to explain various elements, and these terms are only used to distinguish one constitutional element from the other constitutional elements.

Further, the technical terms used herein are for the purpose of describing exemplary embodiments only and is not intended to limit the scope of the invention.

The singular forms "a," "an" and "the" are intended to include plural forms, unless the context clearly indicates otherwise.

It should be understood that the terms "compri se", "include", "have", etc. are used herein to specify the presence of stated features, integers, steps, components or combinations thereof, but do not preclude the presence or addition of one or more other features, integers, steps, components, or combinations thereof.

Further, as used herein, in case a layer or an element is mentioned to be formed "on" layers or elements, it means that the layer or element is directly formed on the layers or elements, or it means that other layers or elements may be additionally formed between the layers, on a subject, or on a substrate.

The present disclosure can be variously modified and may have various forms, and thus specific embodiments are illustrated and described in detail below. However, the present disclosure is not limited to the specific embodiments and should be construed as including all the changes, equivalents, and substitutions included in the spirit and scope of the present disclosure.

Hereinafter, the present disclosure will be described in detail.

Provided herein is an isocyanate composition comprising a diisocyanate-based compound, and a sulfonyl isocyanate-based compound.

Diisocyanate-based compounds are often used together with polythiols when producing polythiourethane-based lenses.

However, isocyanate-based compounds have highly reactive isocyanates, and thus reacts and deteriorates with moisture in the air in a general storage environment, which may pose a problem that they must be strictly controlled under nitrogen conditions or the like.

Xylylene diisocyanate-based compounds, and the like, which have been often used in recent years, are completely sealed after filling with nitrogen at the manufacturing company, and are distributed under refrigerated conditions, so they can be prevented from deteriorating until they are purchased and used. However, it is very difficult to store products not having undergone such treatment, or materials remaining after purchase and use.

Particularly, in the case of xylylene diisocyanate-based compounds, the content of dimers or multimers (oligomers) increases during long-term storage, which causes yellowing or white turbidity and thus deteriorates optical properties.

When a lens is produced using the xylylene diisocyanate-based compound deteriorated in this way, there is a problem that the molecular weight of the polymer solution increases rapidly, the processability is greatly reduced, and the optical properties of the produced lens are also greatly deteriorated.

The present inventors have found that when the sulfonyl isocyanate-based compound is added during storage of the diisocyanate-based compound, long-term storage stability is greatly improved and deterioration can be prevented, thereby completing the present disclosure.

According to one aspect, an isocyanate composition comprising a diisocyanate-based compound, and a sulfonyl isocyanate-based compound is provided.

Since the diisocyanate-based compound contains two isocyanate groups in its molecule, an oligomerization reaction or a polymerization reaction that forms a dimer, trimer, or multimer may proceed through an intermolecular reaction of isocyanate groups. When the diisocyanate-based compound forms a multimer as described above, it causes the troubles in optical properties such as occurrence of white turbidity, and may also greatly reduce the storage stability.

The sulfonyl isocyanate-based compound has excellent compatibility with the diisocyanate-based compound and contains one isocyanate group in its molecule, which has the advantage of not significantly changing the physical properties of the diisocyanate compound itself, while being able to terminate the oligomerization reaction and polymerization reaction of the diisocyanate compound, so that the storage stability of the diisocyanate compound during storage can be greatly improved.

A specific example of the diisocyanate may include orthoxylylene diisocyanate, metaxylylene diisocyanate, para-xylylene diisocyanate, hexamethylene diisocyanate, 2,5-bis(isocyanatomethyl)-bicyclo[2.2.1]heptane, 2,6-bis(isocyanatomethyl)-bicyclo[2.2.1]heptane, bis(isocyanatomethyl)cyclohexane, dicyclohexylmethane diisocyanate, isophorone diisocyanate, 1,2-diisocyanatobenzene, 1,3-diisocyanatobenzene, 1,4-diisocyanatobenzene, 2,4-diisocyanatotoluene, ethylphenylene diisocyanate, dimethylphenylene diisocyanate, biphenyl diisocyanate, toluidine diisocyanate, 4,4'-methylenebis(phenylisocyanate), 1,2-bis(isocyanatomethyl)benzene, 1,3-bis(isocyanatomethyl)benzene, 1,4-bis(isocyanatomethyl)benzene, 1,2-bis(isocyanatoethyl)benzene, 1,3-bis(isocyanatoethyl)benzene, 1,4-bis(isocyanatoethyl)benzene, 4,4'-diisocyanatodicyclohexylmethane, $\alpha,\alpha,\alpha',\alpha'$-tetramethylxylylenediisocyanate, bis(isocyanatomethyl)naphthaline, bis(isocyanatomethylphenyl)ether, bis(isocyanatomethyl)sulfide, bis(isocyanatoethyl)sulfide, bis(isocyanatopropyl)sulfide, 2,5-diisocyanatotetrahydrothiophene, 2,5-diisocyanatomethyltetrahydrothiophene, 3,4-diisocyanatomethyltetrahydrothiophene, 2,5-diisocyanato-1,4-dithiane, 2,5-diisocyanatomethyl-1,4-dithiane, and the like.

In another example independent therefrom, the diisocyanate-based compound may be an aromatic diisocyanate-based compound.

In yet another example independent therefrom, the diisocyanate-based compound may be a compound represented by the following Chemical Formula 1.

[Chemical Formula 1]

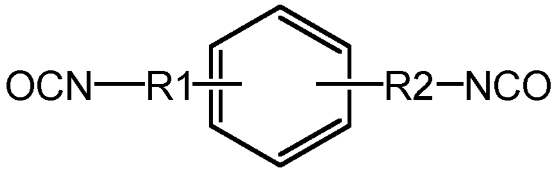

wherein, in Chemical Formula 1,

R1 and R2 are each independently an alkylene having 1 to 5 carbon atoms, and other carbons to which R1 or R2 are not linked in the benzene ring may be each independently substituted with an alkyl having 1 to 5 carbon atoms.

Specifically, the R1 and R2 may be each independently methylene, ethylene, propylene, butylene, pentylene, or the like, wherein in the case of having three or more carbon chains, it may have a branched chain structure.

Specifically, the compound represented by Chemical Formula 1 may be, for example, xylylene diisocyanate, which may have an ortho, meta, or para structure, but the present disclosure is not necessarily limited thereto.

Further, the sulfonyl isocyanate-based compound may be an aromatic sulfonyl isocyanate-based compound.

In another example independent therefrom, the sulfonyl isocyanate-based compound may be a compound represented by the following Chemical Formula 2.

[Chemical Formula 2]

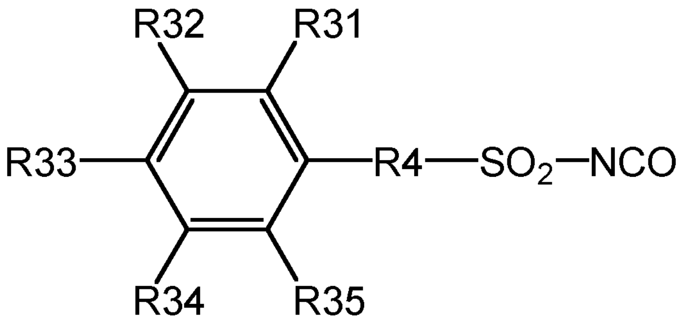

wherein, in Chemical Formula 2, R31 to R35 are hydrogen or an alkyl having 1 to 5 carbon atoms, and R4 is a single bond or an alkylene having 1 to 5 carbon atoms.

Specifically, the alkyl may be methyl, ethyl, propyl, butyl, or pentyl, wherein in the case of having three or more carbon chains, it may have a branched chain structure.

Further, the R4 may be methylene, ethylene, propylene, butylene, pentylene, or the like, wherein in the case of having three or more carbon chains, it may have a branched chain structure

Specifically, the compound represented by Chemical Formula 2 may be, for example, toluenesulfonyl isocyanate, which may have an ortho, meta, or para structure, but the present disclosure is not necessarily limited thereto.

According to one embodiment, the isocyanate composition may comprise the sulfonyl isocyanate-based compound in an amount of about 1 to about 5000 ppmw, or about 1 ppmw or more, or about 10 ppmw or more, or about 100 ppmw or more, or about 400 ppmw or more, or about 500 ppmw or more, or about 600 ppmw or more, or about 900 ppmw or more, or about 5000 ppmw or less, or about 4000 ppmw or less, or about 3000 ppmw or less, or about 2500 ppmw or less with respect to the diisocyanate-based compound.

If the content of the sulfonyl isocyanate-based compound is too small, the long-term storage stability improving effect of the above-mentioned diisocyanate-based compound may not appear, and if the content of the sulfonyl isocyanate-based compound is too high, the physical properties inherent in the diisocyanate-based compound change, and when such a diisocyanate-based compound is used to produce an optical article, problems such as a decrease in refractive index and a decrease in thermal stability may occur.

Further, the isocyanate composition may have an acidity value of about 10 ppm or more, or about 20 ppm or more, or about 40 ppm or more, or about 50 ppm or more, or about 100 ppm or more, and about 500 ppm or less, or about 400 ppm or less, or about 300 ppm or less, or about 200 ppm or less.

As used herein, the "acidity" value of the isocyanate composition refers to the amount of acid liberated by the reaction of the isocyanate compound with alcohol at room temperature. Specifically, for example, it may refer to a value expressed as a ratio of the total weight of XDI when the amount of free acid is converted to HCl. The acidity can be expressed in the units of ppm.

The acidity of the general diisocyanate-based compound itself may be less than about 10 ppm, but when a diisocyanate-based compound and a sulfonyl isocyanate-based compound are mixed as in the present disclosure, the acidity may be partially increased. Due to the increased acidity value, the reactivity of the diisocyanate-based compound is lowered, and the storage stability of the composition can be improved. When such a composition is used to produce a lens, the filtration rate is increased, and thus, the processability and productivity can also be improved.

However, if the acidity value is too high, the speed of the urethane reaction in the lens manufacturing process may be slowed down, which may cause a problem that the productivity is rather reduced.

According to one embodiment, the isocyanate composition has a diisocyanate-based oligomer content of 3area% or less as measured after being stored at 5°C for 40 weeks under a nitrogen atmosphere. Thus, the rate of oligomer formation is very low even during long-term storage, and the storage stability can be very excellent.

Further, the isocyanate composition has an APHA value of about 150 or less, or about 100 or less, or about 50 or less, or about 30 or less, or about 20 or less, or about 15 or less as measured according to ASTM D1209 standard (C/2) after being stored at 5°C for 40 weeks under a nitrogen atmosphere, and the lower limit does not have a great significance, but may be more than 0 or about 1 or more. The discoloration phenomenon may not appear substantially even during long-term storage.

Meanwhile, provided therein is a polymeric composition comprising: i) the above-mentioned isocyanate composition, and ii) at least one of a polyfunctional thiol-based compound and a polyfunctional episulfide-based compound.

The polymerizable composition may include the isocyanate composition, the polyfunctional thiol-based compound, and the polyfunctional episulfide-based compound in a mixed state, or may include them in a state separated from each other. That is, in the polymerizable composition, the isocyanate composition and the polyfunctional thiol-based compound or the polyfunctional episulfide-based compound may be in a state mixed in contact with each other, or may be in a state separated from each other so as not to contact each other.

The polyfunctional thiol-based compound may be a compound containing two or more thio (-SH) groups in a molecule, and may have an aliphatic, alicyclic, or aromatic backbone.

The polyfunctional episulfide-based compound may be a compound containing two or more episulfides, that is, a thioepoxy group in a molecule, and may have an aliphatic, alicyclic, or aromatic backbone.

According to one embodiment, the polyfunctional thiol-based compound may include at least one selected from the group consisting of 4,8-bis(mercaptomethyl)-3,6,9-trithiaundecane-1,11-dithiol, 4,7-bis(mercaptomethyl)-3,6,9-trithiaundecane-1,11-dithiol, 5,7-bis(mercaptomethyl)-3,6,9-trithiaundecane-1,11-dithiol, bis(2-mercaptoethyl)sulfide, 4-mercaptomethyl-3,6-dithiaoctane-1,8-dithiol, 2,3-bis(2-mercaptoethylthio)propane-1-thiol, 2,2-bis(mercaptomethyl)propane-1,3-dithiol, 2-(2-mercaptoethylthio)propane-1,3-dithiol, 2-(2,3-bis(2-mercaptoethylthio)propylthio)ethanethiol, bis(2,3-dimercaptopropanyl)sulfide, bis(2,3-dimercaptopropanyl)di sulfide, 1,2-bis(2-(2-mercaptoethylthio)-3-mercaptopropylthio)ethane, bis(2-(2-mercaptoethylthio)-3-mercaptopropyl)disulfide, 2-(2-mercaptoethylthio)-2-mercapto-3-[3-mercapto-2-(2-mercaptoethylthio)-propylthio]propylthio-propane-1-thiol, 2-(2-mercaptoethylthio)-3-mercapto-3-[3-mercapto-2-(2-mercaptoethylthio)-propylthio]propylthio-propane-1-thiol, 2-(2-mercaptoethylthio)-3-(2-(2-[3-mercapto-2-(2-mercaptoethylthio)-propylthio]ethylthio)ethylthio)-propane-1-thiol, (4R,11S)-4,11-bis(mercaptomethyl)-3,6,9,12-tetrathiatetradecane-1,14-dithiol, (S)-3-((R-2,3-dimercaptopropyl)thio)propane-1,2-dithiol, 4,14-bis(mercaptomethyl)-3,6,9,12,15-pentathiaheptadecane-1,17-dithiol, (S)-3-((R-3-mercapto-2-((2-mercaptoethyl)thio)propyl)thio)propyl)thio)-2-((2-mercaptoethyl)thio)propane-1-thiol, 3,3'-dithiobis(propane-1,2-dithiol), (7R,11S)-7,11-bis(mercaptomethyl)-3,6,9,12,15-pentathiaheptadecane-1,17-dithiol, (7R,12S)-7,12-bis(mercaptomethyl)-3,6,9,10,13,16-hexathiaoctadecane-1,18-dithiol, 2-(2-mercaptoethylthio)-3-[4-(1-{4-[3-mercapto-2-(2-mercaptoethylthio)-propoxy]-phenyl}-1-methyl ethyl)-phenoxy]-propane-1-thiol, 2,2-bis-(3-mercapto-propionyloxymethyl)-butyl ester, pentaerythritol tetrakis(3-mercaptopropionate), pentaerythritol tetrakis(2-mercaptoacetate), bispentaerythritol-ether-hexakis(3-mercaptopropionate), trimethylolpropane tris(2-mercaptopropionate), trimethylolpropane tris(3-mercaptopropionate), glycerol trimercaptopropionate, 1,1,3,3-tetrakis(mercaptomethylthio)propane, 1,1,2,2-tetrakis(mercaptomethylthio)ethane, 4,6-bis(mercaptomethylthio)-1,3-dithiane, 2-(2,2-bis(mercaptomethylthio)ethyl)-1,3-dithiane, and 2,5-bi smercaptomethyl-1,4-dithiane.

According to one embodiment, the polyfunctional episulfide-based compound may include at least one selected from the group consisting of bis(β-epithiopropylthio)methane, 1,2-bis(β-epithiopropylthio)ethane, 1,3-bis(β-epithiopropylthio)propane, 1,2-bis(β-epithiopropylthio)propane, 1-(β-epithiopropylthio)-2-(β-epithiopropylthiomethyl)propane, 1,4-bis(β-epithiopropylthio)butane, 1,3-bis(β-epithiopropylthio)butane, 1-(β-epithiopropylthio)-3-(β-epithiopropylthiomethyl)butane, 1,5-bis(β-epithiopropylthio)pentane, 1-(β-epithiopropylthio)-4-(β-epithiopropylthiomethyl)pentane, 1,6-bis(β-epithiopropylthio)hexane, 1-(β-epithiopropylthio)-5-(β-epithiopropylthiomethyl)hexane, 1-(β-epithiopropylthio)-2-[(2-β-epithiopropylthioethyl)thio]ethane, 1-(β-epithiopropylthio)-2-[[2-(2-β-epithiopropylthioethyl)thioethyl]thio]ethane, tetrakis(β-epithiopropylthiomethyl)methane, 1,1,1-tris(β-epithiopropylthiomethyl)propane, 1,5-bis(β-epithiopropylthio)-2-(β-epithiopropylthiomethyl)-3 -thiapentane, 1,5-bis(β-epithiopropylthio)-2,4-bis(β-epithiopropylthiomethyl)-3-thiapentane, 1-(β-epithiopropylthio)-2,2-bis((3-epithiopropylthiomethyl)-4-thiahexane, 1,5,6-tris(β-epithiopropylthio)-4-(β-epithiopropylthiomethyl)-3-thiahexane, 1,8-bis(β-epithiopropylthio)-4-(β-epithiopropylthiomethyl)-3,6-dithiaoctane, 1,8-bis(β-epithiopropylthio)-4,5-bis(β-epithiopropylthiomethyl)-3,6-dithiaoctane, 1,8-bis(β-epithiopropylthio)-4,4-bis(β-epithiopropylthiomethyl)-3,6-dithiaoctane, 1,8-bis(β-epithiopropylthio)-2,4,5-tris(β-epithiopropylthiomethyl)-3,6-dithiaoctane, 1,8-bis(β-epithiopropylthio)-2,5-bis(β-epithiopropylthiomethyl)-3,6-dithiaoctane, 1,9-bis(β-epithiopropylthio)-5-(β-epithiopropylthiomethyl)-5-[(2-β-epithiopropylthioethyl)thiomethyl]-3,7-dithianonane, 1,10-bis(β-epithiopropylthio)-5,6-bis[(2-β-epithiopropylthioethyl)thio]-3,6,9-trithiadecane, 1,11-bis(β-epithiopropylthio)-4,8-bis(β-epithiopropylthiomethyl)-3,6,9-trithiaundecane, 1,11-bis(β-epithiopropylthio)-5,7-bis(β-epithiopropylthiomethyl)-3,6,9-trithiaundecane, 1,11-bis(β-epithiopropylthio)-5,7-[(2-β-epithiopropylthioethyl)thiomethyl]-3,6,9-trithiaundecane, 1,11-bis(β-epithiopropylthio)-4,7-bis(β-epithiopropylthiomethyl)-3,6,9-trithiaundecane, 1,3-bis(β-epithiopropylthio)cyclohexane, 1,4-bis(β-epithiopropylthio)cyclohexane, 1,3-bis(β-epithiopropylthiomethyl)cyclohexane, 1,4-bis(β-epithiopropylthiomethyl)cyclohexane, bis[4-(β-epithiopropylthio)cyclohexyl]methane, 2,2-bis[4-(β-epithiopropylthio)cyclohexyl]propane, bis[4-(β-epithiopropylthio)cyclohexyl] sulfide, 2,5-bis(β-epithiopropylthiomethyl)-1,4-dithiane, 2,5-bis(β-epithiopropylthioethylthiomethyl)-1,4-dithiane, 1,3-bis(β-epithiopropylthio)benzene, 1,4-bis(β-epithiopropylthio)benzene, 1,3-bis(β-epithiopropylthiomethyl)benzene, 1,4-bis(β-epithiopropylthiomethyl)benzene, bis[4-(β-epithiopropylthio)phenyl]methane, 2,2-bis[4-(β-epithiopropylthio)phenyl]propane, bis[4-(β-epithiopropylthio)phenyl]sulfide, bis[4-(β-epithiopropylthio)phenyl]sulfone, and 4,4'-bis(β-epithiopropylthio)biphenyl.

Within the polymerizable composition, the molar ratio of (thio group + episulfide group) to an isocyanate group may be from about 0.5 to about 1.5, or from about 0.8 to about 1.2, or from about 0.9 to about 1.1, but the present disclosure is not necessarily limited thereto.

In addition, the polymerizable composition may further include additives such as a mold release agent, a heat stabilizer, an ultraviolet stabilizer, a pigment, a urethane reaction catalyst, and the like in an appropriate amount.

The release agent is a kind of surfactant component, and examples thereof may include a fluorine-based nonionic surfactant containing a perfluoroalkyl group; a silicone-based nonionic surfactant containing a dimethylpolysiloxane group; quaternary ammonium salts such as trimethylcetyl ammonium salt, trimethylstearyl, dimethylethylcetyl ammonium salt, triethyldodecyl ammonium salt, trioctylmethyl ammonium salt, diethylcyclohexadodecyl ammonium salt, and the like.

As the heat stabilizer, for example, metal fatty acid-based, phosphorus-based, lead-based, organic tin-based compounds, and the like can be used. These may be used alone or in combination of two or more.

As the ultraviolet stabilizer, for example, benzophenone-based, benzotriazole-based, salicylate-based, cyanoacrylate-based, oxanilide-based compounds and the like can be used.

The pigment may include, for example, fluorescent whitening agents, fluorescent pigments, inorganic pigments, and the like.

As the urethane reaction catalyst, for example, dialkyltin halide-based compounds such as dibutyltin dichloride and dimethyltin dichloride; dialkyltin dicarboxylate-based compounds such as dimethyltin diacetate, dibutyltin dioctanoate, and dibutyltin dilaurate; dialkyltin dialkoxidebased compounds such as dibutyltin dibutoxide and dioctyltin dibutoxide; dialkyltin dithioalkoxide-based compounds such as dibutyltin di(thiobutoxide); dialkyltin oxide compounds such as di(2-ethylhexyl)tin oxide, dioctyltin oxide, and bis(butoxydibutyltin) oxide; dialkyltin sulfide compounds, and the like can be used alone or in combination of two or more.

Further provided herein is an optical lens comprising: i) the above-mentioned isocyanate composition, and ii) at least one of a polyfunctional thiol-based compound and a polyfunctional episulfide-based compound.

Such an optical lens can be manufactured, for example, by the following method.

First, the polymerizable composition is deaerated under reduced pressure and injected into a mold for forming a lens. Mold injection can be performed under the conditions in which polymerization does not occur, specifically, for example, in a temperature range of, for example, about 20 to about 40°C, or room temperature.

Further, after the polymerizable composition is completely injected into the mold, the temperature of the mold can be gradually raised to progress the polymerization reaction of the diisocyanate compound and the polyfunctional thiol-based compound or the polyfunctional episulfide-based compound, that is, the polythiourethane formation reaction.

At this time, the temperature of the polymerization reaction may be about 30 to about 150°C.

After the polymerization reaction is completed, the polythiourethane resin can be separated from the mold to obtain an optical lens.

The refractive index of the manufactured optical lens can be varied according to its intended use, and specifically, it may be adjusted according to the type of diisocyanate-based compound and polyfunctional thiol-based compound or polyfunctional episulfide-based compound used.

**[Advantageous Effects]**

The isocyanate composition according to one embodiment of the present disclosure has high storage stability and thus can maintain excellent quality, whereby a lens manufactured using the same can realize excellent optical properties.

## [DETAILED DESCRIPTION OF THE EMBODIMENTS]

Hereinafter, the action and effect of the present disclosure will be described in more detail with reference to specific examples. However, these examples are presented for illustrative purposes only, and the scope of the invention is not defined thereby.

### Preparation of Diisocyanate-based compound

#### Preparation Example

471 g of 1,2-dichlorobenzene, 32.5 g of m-xylylenediamine (m-XDA) with a purity of 99.4%, and 0.24 g of 4-hydroxy-2,2,6,6-tetramethylpiperidine-1-oxyl (4-hydroxy TEMPO) were charged into a flask, and anhydrous hydrochloric acid was injected at a rate of 20 g/hr at room temperature (23 ± 5 °C) and stirred.
The temperature rose up to 50°C while injecting anhydrous hydrochloric acid.
After injecting for 4 hours, the formed salt was cooled to room temperature, and 43 g of phosgene was charged into a reactor, and heated so that the reactor temperature reached 130°C. From the time point of charging of phosgene to the time point of completion of the reaction, a dry ice-acetone cooler was used to prevent phosgene from flowing out.
After the reactor temperature reached 130°C, the reactor temperature was maintained at 125~135°C for 2 hours so that the reaction solution turned clear. After the solution turned clear, the inside of the reactor was cooled to 80°C, and cooled under nitrogen bubbling. The reaction solution from which phosgene was removed was subjected to a vacuum distillation to remove the solvent, and the product was purified under reduced pressure at a high temperature of 160°C to obtain a meta-xylylene diisocyanate (m-XDI) compound.

### Preparation of Isocyanate Composition

#### Comparative Example 1

An isocyanate composition containing only a meta-xylylene diisocyanate (m-XDI) compound was used without adding a separate additive. The prepared isocyanate composition was stored under refrigerated conditions at about 5°C after filling with nitrogen.

#### Example 1

1000 ppm of para-toluenesulfonylisocyanate (p-TSI) was added to the m-XDI compound obtained in Preparation Example, and mixed to prepare an isocyanate composition. The prepared isocyanate composition was stored under refrigerated conditions at about 5°C after filling with nitrogen.

#### Example 2

An isocyanate composition was prepared in the same manner as in Example 1, except that 500 ppm of p-TSI was added. The prepared isocyanate composition was stored under refrigerated conditions at about 5°C after filling with nitrogen.

#### Example 3

An isocyanate composition was prepared in the same manner as in Example 1, except that 1500 ppm of p-TSI was added. The prepared isocyanate composition was stored under refrigerated conditions at about 5°C after filling with nitrogen.

#### Example 4

An isocyanate composition was prepared in the same manner as in Example 1, except that 1000 ppm of p-TSI was added. The prepared isocyanate composition was stored under refrigerated conditions at about 5°C after filling with nitrogen.
The physical properties of the isocyanate composition were measured by the following manner.

Measurement of Acidity

1. Instruments and reagents

1.1 0.01N KOH standard solution (methanolic): 0.01mol potassium hydroxide methanolic standard solution(0.01N), DAEJUNG, S/T
1.2 n-propyl alcohol: first adjusts the pH to 4-4.5 with dilute hydrochloric acid solution before use.
1.3 300ml beaker
1.4 Potentiometric titrator with glass and caromel electrode: Metrohm E 53 6

2. Test procedure

2.1 100 ml of n-propyl alcohol was added to a 300 ml beaker and stirred.
2.2 15 g of isocyanate composition sample was added to the beaker containing n-propyl alcohol, then covered with a watch glass and stirred for 10 minutes.
2.3 After cooling the beaker, titrated with a 0.01N methanolic KOH standard solution in a potentiometer titrator to read the apparent acidity.
Condition: Mode; pH 14, V 0, titration speed 0.05mℓ increasement
Apparent acidity occurs between pH 5.5 and 7.0.
2.4 A blank test was performed in parallel with steps 2.1 to 2.3 in the same manner as above, except that the isocyanate composition sample was not added in step 2.2 above.

3. Calculation

[Equation 1]

$$\text{Acidity (as HCl) (ppm)} = [(A\text{-}B)\times N\times f\times 36.5\times 10\hat{\ }6]/(C\times 10\hat{\ }3)$$

wherein,

A: volume (ml) of KOH methanol solution consumed for titration of isocyanate composition sample
B: volume of KOH methanol solution consumed for a black test titration (ml)
N: Normal concentration of KOH methanol solution
f: a factor for correcting so as to be equal to 0.01N KOH methanol solution when the normal concentration of the KOH methanol solution used for measurement changes, which was measured according to ASTM D-1638, TOLOCHIMIE 04-01-68. The f value was 1 for 0.01N KOH methanol solution.
C: weight (g) of isocyanate composition sample

**Manufacture of Lens**

20.8 g of the isocyanate composition prepared in Examples and Comparative Examples, 0.04 g of zelec UN (manufactured by Stepan) and 0.04 g of biosorb 583 (manufactured by Sakai Chemical Industry Co., Ltd) were placed in a flask, and mixed under stirring at room temperature for about 20 minutes to prepare a polyisocyanate.
After visually confirming that the components were well mixed in the polyisocyanate, 0.002 g of dibutyltin chloride was added as a catalyst and mixed under stirring for 10 minutes.
19.2 g of 2,3-bis(2-sulfanyl ethyl sulfanyl)propane-1-thiol was added to the resulting mixture, deaerated at 5mbar and stirred for 1 hour to prepare a polymerizable composition.
The polyisocyanate composition was filtered through a 1 μm PTFE filter, and then injected into a molding frame made of a glass mold and tape. The molding mold was put into an oven, the temperature of the oven was gradually raised from 10°C to 120°C, and the polymerization reaction was performed for about 20 hours.
After completion of the polymerization, the molding mold was taken out of the oven and released to obtain a plastic lens. The obtained lens was annealed at 120°C for 6 hours.

## Measurement of Filtration Time

For the polyisocyanate polymerization compositions prepared in Examples and Comparative Example, the time (min) required for filtration was measured using a PTFE filter (25mm Diameter Syringe Filter, manufactured by Whatman) with a pore size of 1.0 μm, and the workability improving effect was evaluated from the results.
The filtration time means the time from the time point when 200 g of the composition for polymerization of polyisocyanate has passed through the filter to the time point when the passage has been completed.

## Measurement of Yellow Index (YI)

It was measured according to ASTM E313 standard (D65/10) using a color difference meter (Ultrascan Pro, HunterLab).
The measurement results are summarized in Table below.

[Table 1]

| | Example 1 | Example 2 | Example 3 | Example 4 | Comparative Example |
|---|---|---|---|---|---|
| Acidity(ppm) | 130 | 48 | 162 | 188 | 5 |
| Filtration time (min) | 5 | 15 | 5 | 5 | 35 |
| Lens YI | 1.5 | 1.5 | 1.6 | 1.7 | 1.4 |

Referring to Table 1, it can be confirmed that the composition according to one embodiment of the present disclosure has a relatively higher acidity value than in Comparative Example, and it can be clearly confirmed that the filtration time reaches about 1/7 level of Comparative Example. That is, it is considered that the composition according to one embodiment of the present invention is significantly more excellent in workability or processability than in Comparative Example.

## Oligomer Content

The oligomer content in the isocyanate composition was measured by the following method.
First, the isocyanate composition was subj ected to gel permeation chromatography (GPC) analysis in accordance with the following conditions to obtain a molecular weight distribution curve (GPC curve) for the isocyanate composition. Of the total area of the GPC molecular weight distribution curve, the area of the fraction corresponding to the oligomer was expressed as a percentage. Specifically, the oligomer content (area%) was calculated according to the following Equation 2.

[Equation 2]

$$\text{Oligomer content (\%)} = [B/A] \text{ X } 100$$

wherein,

A is the total area under curve in the molecular weight distribution curve (GPC curve) for the isocyanate composition, and
B is the area of the peak corresponding to the oligomer in the molecular weight distribution curve for the isocyanate composition.

The total area of the GPC curve and the area of the fraction corresponding to the oligomer were each determined through integration. At this time, the oligomer was evaluated based on a polymer having a weight average molecular weight (Mw) value of 600 to 2000 g/mol, and the fraction corresponding to the oligomer in the GPC curve was 19.42 ≤ logMw ≤ 22.18.

<GPC analysis conditions>

Equipment used: Agilent
Columns: Agilent PL Mixed D, Agilent PLgel 100Å, Agilent PLgel 50Å
Sample concentration: 1wt/vol% in tetrahydrofuran (THF)
Carrier: THF
Detection method: RI
Flow rate: 1.0 ml/min
Column temperature: 25°C
Detector: Agilent RI detector

When preparing the calibration curve, a polystyrene standard foam having a molecular weight of 104 to 24,600 g/mol was used.

## Measurement of APHA color index

The color index value of the composition was measured according to ASTM D1209 standard (C/2, 10 mm quartz cell) using a color difference meter (Ultrascan Pro).

## Measurement of optical properties

The existence of haze occurrence in the composition was visually observed and evaluated as follows.

Clear: clear and transparent entirely
Light haze: transparent as a whole, but haze is observed when illuminated with light (fluorescent light)
Haze: opacity is clearly confirmed with the naked eye

## Measurement of Purity

The purity of m-XDI in Examples and Comparative Example was analyzed using GC. First, GC analysis was performed on the m-XDI composition immediately after purification, and the content of m-XDI was measured after being stored under refrigerated conditions (5°C) for 5 and 40 weeks. For m-XDI where white turbidity occurred, since the white turbid material is an insoluble material, GC analysis was not possible. Thus, the purity after filtration was measured, and a separate analysis was conducted for the content of the white turbid material.

The GC used for the analysis was HP-6890 and was detected by FID. The column used was DB-17 (30m * 0.25mm * 0.5,um), the carrier gas was nitrogen (1.0 mL/min), and the oven temperature was 80 °C -> 5 °C/min -> 160 °C (8 min) -> 20 °C/min -> 280 °C (18 min).

[Table 2]

| | oligomer content (area%) | | |
|---|---|---|---|
| Storage period | 0 month | 5 months | 40 weeks |
| Example 1 | 0.62 | 2.20 | 2.92 |
| Comparative Example 1 | 0.62 | 2.21 | 3.06 |
| | APHA(C/2, 10mm) | | |
| Storage period | 0 month | 5 months | 40 weeks |
| Example 1 | 8 | 11 | 13 |
| Comparative Example 1 | 2 | 28 | 174 |
| | m-XDI clarity (existence of haze occurrence) | | |
| Storage period | 0 month | 5 months | 40 weeks |
| Example 1 | X | X | light haze |
| Comparative Example 1 | X | haze | Haze |
| | Purity (area%) | | |
| Storage period | 0 month | 5 months | 40 weeks |

(continued)

| | Purity (area%) | | |
|---|---|---|---|
| Example 1 | 99.70 | 99.74 | 99.75 |
| Comparative Example 1 | 99.85 | 99.84 | 99.70 |

Referring to Table above, it can be confirmed that the composition according to one embodiment of the present disclosure does not show a large change in color index value, hardly generates haze, and maintains high purity even during long-term storage, as compared with the composition of Comparative Example.

Also, it can be confirmed that the composition according to one embodiment of the present disclosure has a lower oligomer content than the composition of Comparative Example even during long-term storage.

However, when measuring oligomer content by GPC, the sample was diluted with THF, filtered with a 1.0$\mu$m PTFE filter (25mm Diameter Syringe Filter, manufactured by Whatman), and then put into GPC. However, because a polymer material was filtered during filtration, there was a problem that it was difficult to determine the correct oligomer content.

Therefore, in order to more accurately compare the portion associated with oligomer formation, the thermal decomposition temperature was measured.

## Measurement of Thermal Decomposition Temperature

The m-XDIs prepared in Examples and Comparative Example were stored under refrigerated conditions (5°C) for about 10 months, and the occurrence of white turbidity was confirmed.

10 ml of m-XDI was dissolved in 50 ml of n-hexane, and n-hexane was removed so that undissolved components remained. After n-hexane was removed, 50 ml of THF was added, and it was confirmed with the naked eye that it was in a transparent state. Again, an excessive amount of n-hexane was added thereto until an opaque insoluble material was seen. Once an opaque material was confirmed, the n-hexane was removed and evaporated at about 40°C so that no residual solvent remained. After visually confirming that the solvent has been removed, it was dried at about 40°C under vacuum conditions for about 12 hours so that all solvents were completely removed, and then dried at about 120°C under vacuum conditions for about 8 hours.

The dried sample was cooled to room temperature, and the temperature was raised from room temperature to 700 °C under the condition of 10 °C/min using TGA, to measure the weight change. The temperature at the point where the weight loss was 10%, 20%, 30%, and 40% is summarized in Table below.

[Table 3]

| | Weight Loss (%) | | | |
|---|---|---|---|---|
| | 10 | 20 | 30 | 40 |
| Example 1 | 195°C | 217 | 235 | 279 |
| Comparative Example 1 | 253 | 285 | 357 | 410 |

When an isocyanate compound reacts to form an oligomer, since thermal decomposition becomes more difficult, more energy is required for thermal decomposition, so that the thermal decomposition tends to occur at higher temperatures.

Referring to Table above, it can be clearly confirmed that in the case of Comparative Example, thermal decomposition occurs at a much higher temperature than in Example, and it can be confirmed that the temperature difference is very large.

## Measurement of Tg and Tm values

The white turbid material was recovered by the same method as in the TGA measurement, and the glass transition temperature values and melting points were determined by differential scanning calorimetry.

Equipment: DSC

Measuring condition:

Primary heating: -70°C ~180°C, 20°C/min; Cooling: 180°C~-70°C, -100°C/min; secondary heating: -70°C~180°C, 20°C/min;

[Table 4]

| | Tg (°C) | Tm (°C) |
|---|---|---|
| Example 1 | - | -6.3 |
| Comparative Example 1 | 12.2 | - |

Referring to Table above, it can be seen that Tg is confirmed in Comparative Example 1 in which pTSI was not added. This means that a polymer material having a Tg value was formed in Comparative Example 1, which means that the storage stability of the composition according to Comparative Example 1 is remarkably low.

## Claims

**1.** An isocyanate composition comprising a diisocyanate-based compound, and a sulfonyl isocyanate-based compound.

**2.** The isocyanate composition according to claim 1, wherein:
the diisocyanate-based compound is represented by the following Chemical Formula 1:

[Chemical Formula 1]

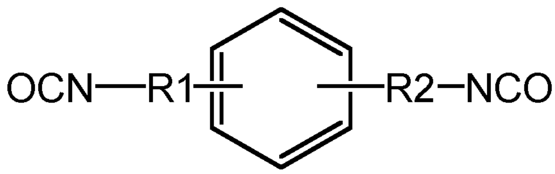

wherein, in Chemical Formula 1,

R1 and R2 are each independently an alkylene having 1 to 5 carbon atoms, and
other carbons to which R1 or R2 are not linked in the benzene ring may be each independently substituted with an alkyl having 1 to 5 carbon atoms.

**3.** The isocyanate composition according to claim 1, wherein:

the sulfonyl isocyanate-based compound is represented by the following Chemical Formula 2:

[Chemical Formula 2]

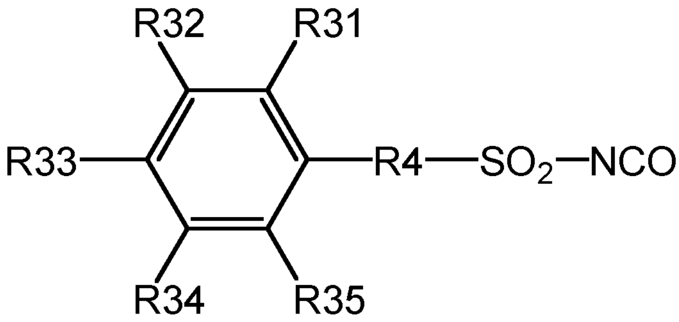

wherein, in Chemical Formula 2,
R31 to R35 are hydrogen or an alkyl having 1 to 5 carbon atoms, and
R4 is a single bond or an alkylene having 1 to 5 carbon atoms.

4. The isocyanate composition according to claim 1, wherein:
the isocyanate composition comprises the sulfonyl isocyanate-based compound in an amount of 1 to 5000 ppmw with respect to the diisocyanate-based compound.

5. The isocyanate composition according to claim 1, wherein:
the isocyanate composition has an acidity value of 10 ppm or more.

6. The isocyanate composition according to claim 1, wherein:
the isocyanate composition has a diisocyanate-based oligomer content of 3area% or less as measured after being stored at 5°C for 40 weeks under a nitrogen atmosphere.

7. The isocyanate composition according to claim 1, wherein:
the isocyanate composition has an APHA value of 150 or less as measured according to ASTM D1209 standard (C/2) after being stored at 5°C for 40 weeks under a nitrogen atmosphere.

8. A polymeric composition comprising:

the isocyanate composition according to any one of claims 1 to 7, and
at least one of i) a polyfunctional thiol-based compound and ii) a polyfunctional episulfide-based compound.

9. The polymeric composition according to claim 8, wherein:
the polyfunctional thiol-based compound includes at least one selected from the group consisting of 4,8-bis(mercaptomethyl)-3,6,9-trithiaundecane-1,11-dithiol, 4,7-bis(mercaptomethyl)-3,6,9-trithiaundecane-1,11-dithiol, 5,7-bis(mercaptomethyl)-3,6,9-trithiaundecane-1,11-dithiol, bis(2-mercaptoethyl)sulfide, 4-mercaptomethyl-3,6-dithiaoctane-1,8-dithiol, 2,3-bis(2-mercaptoethylthio)propane-1-thiol, 2,2-bis(mercaptomethyl)propane-1,3-dithiol, 2-(2-mercaptoethylthio)propane-1,3-dithiol, 2-(2,3-bis(2-mercaptoethylthio)propylthio)ethanethiol, bis(2,3-dimercaptopropanyl)sulfide, bis(2,3-dimercaptopropanyl)di sulfide, 1,2-bis(2-(2-mercaptoethylthio)-3-mercaptopropylthio)ethane, bis(2-(2-mercaptoethylthio)-3-mercaptopropyl)disulfide, 2-(2-mercaptoethylthio)-2-mercapto-3-[3-mercapto-2-(2-mercaptoethylthio)-propylthio]propylthio-propane-1-thiol, 2-(2-mercaptoethylthio)-3-mercapto-3-[3-mercapto-2-(2-mercaptoethylthio)-propylthio]propylthio-propane-1-thiol, 2-(2-mercaptoethylthio)-3-(2-(2-[3-mercapto-2-(2-mercaptoethylthio)-propylthio]ethylthio)ethylthio)-propane-1-thiol, (4R,11S)-4,11-bis(mercaptomethyl)-3,6,9,12-tetrathiatetradecane-1,14-dithiol, (S)-3-((R-2,3-dimercaptopropyl)thio)propane-1,2-dithiol, 4,14-bis(mercaptomethyl)-3,6,9,12,15-pentathiaheptadecane-1,17-dithiol, (S)-3-((R-3-mercapto-2-((2-mercaptoethyl)thio)propyl)thio)propyl)thio)-2-((2-mercaptoethyl)thio)propane-1-thiol, 3,3'-dithiobis(propane-1,2-dithiol), (7R,11S)-7,11-bis(mercaptomethyl)-3,6,9,12,15-pentathiaheptadecane-1,17-dithiol, (7R,12S)-7,12-bis(mercaptomethyl)-3,6,9,10,13,16-hexathiaoctadecane-1,18-dithiol, 2-(2-mercaptoethylthio)-3 -[4-(1-{4-[3 -mercapto-2-(2-mercaptoethylthio)-propoxy]-phenyl}-1-methyl ethyl)-phenoxy]-propane-1-thiol, 2,2-bis-(3-mercapto-propionyloxymethyl)-butyl ester, pentaerythritol tetrakis(3-mercaptopropionate), pentaerythritol tetrakis(2-mercaptoacetate), bispentaerythritol-ether-hexakis(3-mercaptopropionate), trimethylolpropane tris(2-mercaptopropionate), trimethylolpropane tris(3-mercaptopropionate), glycerol trimercaptopropionate, 1,1,3,3-tetrakis(mercaptomethylthio)propane, 1,1,2,2-tetrakis(mercaptomethylthio)ethane, 4,6-bis(mercaptomethylthio)-1,3-dithiane, 2-(2,2-bis(mercaptomethylthio)ethyl)-1,3-dithiane, and 2,5-bi smercaptomethyl-1,4-dithiane.

**10.** An optical lens comprising:

the isocyanate composition according to any one of claims 1 to 7, and
at least one of i) a polyfunctional thiol-based compound and ii) a polyfunctional episulfide-based compound.

# INTERNATIONAL SEARCH REPORT

International application No. **PCT/KR2022/019141**

## A. CLASSIFICATION OF SUBJECT MATTER

**C08G 18/76**(2006.01)i; **C08G 18/77**(2006.01)i; **C08G 18/38**(2006.01)i; **G02B 1/04**(2006.01)i; **C08G 18/09**(2006.01)i; **C07C 311/65**(2006.01)i; **C08L 75/02**(2006.01)i

According to International Patent Classification (IPC) or to both national classification and IPC

## B. FIELDS SEARCHED

Minimum documentation searched (classification system followed by classification symbols)

C08G 18/76(2006.01); C07C 263/18(2006.01); C07C 265/12(2006.01); C08G 18/38(2006.01); C08G 75/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 디이소시아네이트(diisocyanate), 설포닐 이소시아네이트(sulfonyl isocyanate), 저장 안정성(storage stability), 티올계 화합물(thiol compound), 에피설파이드계 화합물(episulfide compound), 폴리티오우레탄(polythiourethane), 렌즈(lens)

## C. DOCUMENTS CONSIDERED TO BE RELEVANT

| Category* | Citation of document, with indication, where appropriate, of the relevant passages | Relevant to claim No. |
|---|---|---|
| X<br>Y | US 3330849 A1 (ULRICH, H.) 11 July 1967 (1967-07-11)<br>See abstract; claim 1; columns 1-4; and example 1. | 1-7<br>8-10 |
| Y | KR 10-2021-0129504 A (SKC CO., LTD.) 28 October 2021 (2021-10-28)<br>See claims 5-7; and paragraphs [0100]-[0103]. | 8-10 |
| A | KR 10-1994-0011150 B1 (MITSUI TOATSU CHEMICALS, INC.) 24 November 1994 (1994-11-24)<br>See entire document. | 1-10 |
| A | KR 10-2002-0032363 A (HOYA CORPORATION) 03 May 2002 (2002-05-03)<br>See entire document. | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 March 2023** | **15 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.
**PCT/KR2022/019141**

### C. DOCUMENTS CONSIDERED TO BE RELEVANT

| Category* | Citation of document, with indication, where appropriate, of the relevant passages | Relevant to claim No. |
|---|---|---|
| A | KR 10-0553011 B1 (HOYA CORPORATION) 16 February 2006 (2006-02-16)<br>See entire document. | 1-10 |

Form PCT/ISA/210 (second sheet) (July 2022)

**INTERNATIONAL SEARCH REPORT**
**Information on patent family members**

International application No.
**PCT/KR2022/019141**

| Patent document cited in search report | Publication date (day/month/year) | Patent family member(s) | Publication date (day/month/year) |
|---|---|---|---|
| US 3330849 A1 | 11 July 1967 | None | |
| KR 10-2021-0129504 A | 28 October 2021 | CN 115443296 A | 06 December 2022 |
| | | KR 10-2394396 B1 | 06 May 2022 |
| | | WO 2021-215606 A1 | 28 October 2021 |
| KR 10-1994-0011150 B1 | 24 November 1994 | EP 0505150 A1 | 23 September 1992 |
| | | EP 0505150 B1 | 14 June 1995 |
| | | JP 05-078304 A | 30 March 1993 |
| | | JP 2912490 B2 | 28 June 1999 |
| | | KR 10-1992-0018015 A | 21 October 1992 |
| | | US 5302749 A | 12 April 1994 |
| KR 10-2002-0032363 A | 03 May 2002 | CN 1171867 C | 20 October 2004 |
| | | CN 1277126 C | 27 September 2006 |
| | | CN 1351009 A | 29 May 2002 |
| | | CN 1554958 A | 15 December 2004 |
| | | EP 1211276 A2 | 05 June 2002 |
| | | EP 1211276 A3 | 26 November 2003 |
| | | EP 1211276 B1 | 20 December 2006 |
| | | KR 10-2004-0091600 A | 28 October 2004 |
| | | US 2002-0099167 A1 | 25 July 2002 |
| | | US 6559276 B2 | 06 May 2003 |
| KR 10-0553011 B1 | 16 February 2006 | CN 1322337 C | 20 June 2007 |
| | | CN 1448732 A | 15 October 2003 |
| | | EP 1348726 A1 | 01 October 2003 |
| | | EP 1348726 B1 | 06 September 2006 |
| | | JP 2004-002712 A | 08 January 2004 |
| | | JP 3866671 B2 | 10 January 2007 |
| | | KR 10-2003-0078691 A | 08 October 2003 |
| | | US 2003-0194487 A1 | 16 October 2003 |
| | | US 7101953 B2 | 05 September 2006 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210169322
- KR 1020220133365